# EUROPEAN PATENT APPLICATION

(11) **EP 1 575 106 A2**
(43) Date of publication of application: **14.09.2005**
(21) Application number: 05002779.6
(22) Date of filing: 10.02.2005
(51) Int. Cl.: H01M 4/88, H01M 4/86, H01M 8/10

(54) **Catalyst supporting method for polymer electrolyte fuel cell**

(30) Priority: 16.02.2004 JP 2004038393; 19.03.2004 JP 2004080681
(71) Applicant: AISIN SEIKI KABUSHIKI KAISHA, Aichi-ken 448-8650 (JP)
(72) Inventor: Ogura, Yoshikazu, Kariya Aichi, 448-8605 (JP)
(74) Representative: TBK-Patent

(57) **Abstract**

A catalyst supporting method for a polymer electrolyte fuel cell for supporting a catalyst metal in a catalyst layer (12) of an anode (1) and a catalyst layer (22) of a cathode (2) is characterized in that the catalyst supporting method for a solid polymer fuel cell includes steps of a making step for making a layered unit by arranging, in sequential order, a gas diffusion layer (10) of the anode (1), the catalyst layer (12) of the anode (1), a proton-conductive polymer membrane (4), the catalyst layer (22) of the cathode (2), and a gas diffusion layer (20) of the cathode (2), a connecting step for electrically connecting the catalyst layer (12) of the anode (1) of the layered unit to the catalyst layer (22) of the cathode (2) of the layered unit through an electric conductive path (50), and a catalyst-supporting step for generating the catalyst metal by a process of reduction of a precursor of the catalyst metal included in one of the anode and the cathode, by a process of oxidation induced at the other of the anode (1) and the cathode (2), and a process of reduction at the one of the anode (1) and the cathode (2) with electrons generated during the oxidation.

## Description

### FIELD OF THE INVENTION

This invention generally relates to a method for supporting a catalyst. More particularly, this invention generally relates to a method for supporting a catalyst for a polymer electrolyte fuel cell.

### BACKGROUND

A fuel cell generates electricity by directly converting chemical energy generated by the oxidation of fuels such as hydrogen gas, methanol, or hydrocarbons, and the chemical energy produced by the reduction of oxygen and air, or the like, to electric energy. Accordingly, unlike in the case of electricity generated by the use of fuels such as fossil fuels, environmentally-destructive substances, such as NOx, SOx are not generated, and, the fuel cell is accordingly attracting increasing attention as a source of clean electric energy.

In some kinds of fuel cells, a polymer electrolyte fuel cell can be operated at a relatively low temperature, and the polymer fuel cell is expected to be utilized both on vehicles, and for positioning (for home use, or office use). The polymer electrolyte fuel cell has a layered structure including a gas diffusion layer of an anode, a catalyst layer of the anode, a proton-conductive polymer membrane, a catalyst layer of a cathode, and a gas diffusion layer of the cathode. Utilized in the catalyst layers of the anode and the cathode of the fuel cell is a catalyst described as a carbon-supported platinum (platinum alloy), which is either platinum or a platinum alloy in a nanometer-scale structure supported on the surface of an electrically conductive carbon base.

According to the structure of the polymer electrolyte fuel cell, a manufacturing method for an electrode of the fuel cell is generally as follows. A carbon-supported catalyst, that is, a catalyst metal densely dispersed on a base made of an electrically conductive substance such as carbon black, and an ion-conductive polymer electrolyte, are mixed. The mixed substance is like paste. The paste is painted on the gas diffusion layer, or on the proton-conductive polymer membrane by means of a method such as a roll coating method, a spraying method, or a doctor blade method, and then dried. Thus the catalyst layer is formed. After that, the catalyst layer is generally hot-pressed with some other materials to make a layered structure arranged in the following order: the gas diffusion layer of the anode, the catalyst layer of the anode, the proton-conductive polymer membrane, the catalyst layer of the cathode, and the gas diffusion layer of the cathode.

Incidentally, JPH6-260170A, JP2003-157856A, and JP2002-373665A describe manufacturing methods of an electrode other than the general method described above. In these documents, a catalyst-supporting technique is described. In the catalyst-supporting technique, a material for the electrode of the fuel cell, including carbon particles and a cation-exchange resin, is utilized. Cations of catalyst metal are absorbed by the cation-exchange resin by means of an ion-exchange between cations in the cation-exchange resin and cations including the catalyst metal. After that, the cations of the catalyst metal are reduced by use of hydrogen gas, and the catalyst metal is deposited on carbon particles.

Further, JP2001-118583A describes another catalyst-supporting technique. In this catalyst-supporting technique, electrolysis reduction is carried out in both an anode and a cathode, by using a power source either to apply a large electric current between both electrodes, or to apply several volts of voltage, in order to deposit a catalyst metal on carbon particles. At this time, an inert gas such as nitrogen gas is supplied to both the anode and the cathode.

Every technique described in the above documents can produce an electrode for a fuel cell which has a high degree of catalytic activity. However, the amount of catalytic metal (weight of the catalytic metal within an unit area of 1cm² of the electrode) is limited by the ion-exchange capacity of the ion-exchange resin, a limitation which also inhibits further improvements in the catalytic activity and cell voltage. However, further increases in the catalytic activity and cell voltage are required. Further, according to the techniques described above, the catalyst layers of the anode and the cathode are form by the painting of paste containing the catalytic metal onto either the gas diffusion layer or onto the proton-conductive membrane. According to these techniques, reduction of a precursor of the catalyst is not carried out, either in a condition where the membrane electrode assembly has been assembled, or in a condition where the fuel cell stack has been assembled.

Also in the context of the reduction method, according to JP2001-118583A, whole inert gas such as nitrogen gas is supplied to both of the anode and the cathode, electrolysis reduction is undertaken with the use of a power source, either by forcibly applying a large current between both electrodes, or by applying several volts of voltage. However, such a reduction method requires a large facility for electrolysis, and this tends to lead to high manufacturing costs. Further, in the case of electrolysis reduction, in a case where a substance that can be oxidized is included in either the anode or in the cathode, a material for forming the electrode may be damaged by oxidation in the course of the electrolysis reduction of the catalytic metal cations, a disadvantage which inhibits an improvement in catalytic activity and in the cell voltage.

A need thus exists for a catalyst-supporting method for a fuel cell which can provide a polymer electrolyte fuel cell with a high level of catalytic activity and a high cell voltage. Further, a need thus exists for a catalyst-supporting method for a fuel cell according to which manufacturing costs of a polymer electrolyte fuel cell can be reduced.

### SUMMARY OF THE INVENTION

According to an aspect of the present invention, a catalyst supporting method for a polymer electrolyte fuel cell for supporting a catalyst metal in a catalyst layer (12) of an anode (1) and a catalyst layer (22) of a cathode (2) is characterized in that the catalyst supporting method for a solid polymer fuel cell includes steps of a making step for making a layered unit by arranging, in sequential order, a gas diffusion layer (10) of the anode (1), the catalyst layer (12) of the anode (1), a proton-conductive polymer membrane (4), the catalyst layer (22) of the cathode (2), and a gas diffusion layer (20) of the cathode (2), a connecting step for electrically connecting the catalyst layer (12) of the anode (1) of the layered unit to the catalyst layer (22) of the cathode (2) of the layered unit through an electric conductive path (50), and a catalyst-supporting step for generating the catalyst metal by a process of reduction of a precursor of the catalyst metal included in one of the anode and the cathode, by a process of oxidation induced at the other of the anode (1) and the cathode (2), and a process of reduction at the one of the anode (1) and the cathode (2) with electrons generated during the oxidation.

According to a further aspect of the present invention, a catalyst supporting method for a solid polymer fuel cell for supporting a catalyst metal in a catalyst layer (12) of an anode (1) and a catalyst layer (22) of a cathode (2) is characterized in that the catalyst supporting method for a solid polymer fuel cell includes steps of a first step for arranging, in a sequential order, a gas diffusion layer (10) of the anode (1), the catalyst layer (12) of the anode (1), a proton-conductive polymer membrane (4), the catalyst layer (22) of the cathode (2), and a gas diffusion layer (20) of the cathode (2), and for forming a plurality of membrane electrode assemblies (3) including a precursor of the catalyst metal which can be reduced in at least one of the catalyst layer (12) of the anode (1) and the catalyst layer (22) of the cathode (2), a second step for assembling a distribution member (16) for supplying fuel to the catalyst layer (12) of the anode (1) through the gas diffusion layer (20) of the anode (1), a distribution member (26) for supplying oxidant gas to the catalyst layer (22) of the cathode (2) through the gas diffusion layer (20) of the cathode (2), and the membrane electrode assembly (3), to form a fuel cell stack (6) having a corridor (35) for supplying the fuel to the distribution member (16) for supplying the fuel, and a corridor (36) for supplying the oxidant gas to the distribution member (26) for supplying the oxidant gas, and a third step for supplying the reducer gas to at least one of the catalyst layer (12) of the anode (1) and the catalyst layer (22) of the cathode (2) through at least one of the corridor (35) for supplying the fuel or the corridor (36) for supplying the oxidant gas to reduce the precursor of the catalyst metal included in at least the one of the catalyst layer (12) of the anode (1) and the catalyst layer (22) of the cathode (2) and thus to precipitate the catalyst metal in at least the one of the catalyst layer (12) of the anode (1) and the catalyst layer (22) of the cathode (2).

According to a further aspect of the present invention, a catalyst-supporting method for a polymer electrolyte fuel cell having a high catalytic activity and a high cell voltage can be provided. According to a further aspect of the present invention, a precursor of catalyst metal included in plural catalyst layers of anodes and/or plural catalyst layers of cathodes can be integrally and simultaneously reduced, a method which is advantageous in terms of reducing manufacturing costs.

According to a further aspect of the present invention, because plural catalyst layers of anodes and/or plural catalyst layers of cathodes can be integrally and simultaneously reduced, it is advantageous to make uniform the quality of the catalyst included in the catalyst layers of plural membrane electrode assemblies, an arrangement which can contribute to enhance generation of electricity.

### BRIEF DESCRIPTION OF THE DRAWINGS

The foregoing and additional features and characteristics of the present invention will become more apparent from the following detailed description considered with reference to the accompanying drawings, wherein:
Fig. 1 represents a schematic diagram illustrating a fuel cell according to a first embodiment.
Fig. 2 represents a schematic diagram showing a catalyst-supporting step for the fuel cell according to the first embodiment.
Fig. 3 represents a bar chart indicating an electric current per unit weight of platinum when cell voltage is set to 900 mV.
Fig. 4 represents a graph indicating a relation between the amount of supported platinum and the cell voltage in a case where an electric current density is set to 0.26 A/cm².
Fig. 5 represents a schematic diagram illustrating the catalyst-supporting step implemented with a fuel cell stack in which plural fuel cells are assembled together.
Fig. 6 represents a schematic diagram illustrating a catalyst-supporting step for the fuel cell according to a fourth embodiment.
Fig. 7 represents a brief schematic view illustrating a fuel cell stack according to a fifth embodiment.
Fig. 8 represents a graph indicating a relation between current and voltage, that is relevant to the performance of a polymer electrolyte fuel cell.
Fig. 9 represents a graph indicating thermal deterioration in a membrane.

### DETAILED DESCRIPTION

Embodiments of the present invention will be explained with reference to examples.

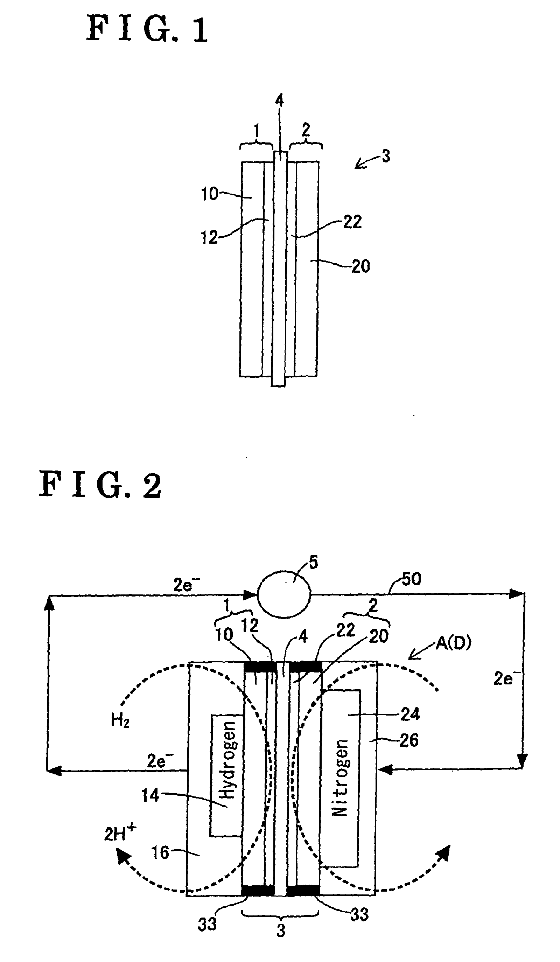

A first embodiment of the present invention will be explained with reference to a first example. The first example will be explained with reference to the drawing figures. Fig. 1 represents a schematic diagram illustrating a fuel cell in the first example according to the first embodiment. As shown in Fig. 1, a membrane electrode assembly 3 is made up of a gas diffusion layer 10 of an anode 1, a catalyst layer 12 of the anode 1, a proton-conductive polymer membrane 4, a catalyst layer 22 of a cathode 2, and a gas diffusion layer 20 of the cathode 2, arranged in sequential order in a thickness direction. The membrane electrode assembly 3 is assembled with a gas distribution member 16 for supplying fuel having a flowing channel 14 for fuel and a gas distribution member 26 for supplying oxidant gas having a flowing channel 24 for oxidant gas. Thus, a fuel cell is structured. The gas diffusion layer 10 of the anode 1 and the gas diffusion layer 20 of the cathode 2 both have gas permeability and electric conductivity.

First, a manufacturing method for the catalyst layer 12 of the anode 1 in the first example according to the first embodiment will be explained. For manufacturing the catalyst layer 12 of the anode 1, a carbon-supported platinum-ruthenium catalyst (manufactured by Tanaka Kikinzoku Kogyo KK, TEC62E58), having platinum-ruthenium 57% by weight supported by electric conductive carbon black (Ketjenblack), was used. The carbon-supported platinum-ruthenium catalyst (platinum-ruthenium supported by carbon as a base), purified water, alcohol-dispersed cation-exchange resin solution (manufactured by Asahi Kasei Corporation, Aciplex SS-1100), and isopropyl alcohol were mixed in a ratio of 1:4:15:2 by weight. Then, the carbon-supported platinum-ruthenium was dispersed so as to be 0.5µm-1.0 µm in terms of a diameter of a secondary particle. Catalyst paste for the anode 1 was thereby produced. The catalyst paste was applied onto an ETFE film (manufactured by Asahi Glass Company, Aflex) by means of an applicator, and thus a thin film of the catalyst paste was formed with a uniform thickness. The catalyst paste applied was dried in a condition of 80 °C. The dried catalyst paste was then cut into pieces of the size of an electrode, and thus the catalyst layer 12 of the anode 1 was formed.

Next, a manufacturing method for the catalyst layer 22 of the cathode 2 in the first example according to the first embodiment will be explained. For manufacturing the catalyst layer 22 of the cathode 2, Ketjenblack (manufactured by Ketjenblack International Corporation), 25g, as a precursor of the catalyst a diaminedinitroplatinum nitric acid solution (manufactured by Tanaka Kikinzoku Kogyo KK), 36g, as a cation-exchange resin an alcohol-dispersed cation-exchange resin solution (manufactured by Asahi Kasei Corporation, Aciplex SS-1100), 63g, isopropyl alcohol, 5g, and purified water were mixed, and thus a catalyst paste for the cathode 2 was formed. The cation-exchange resin includes a sulfonic group.

The catalyst paste for the cathode 2 was applied onto an ETFE film (manufactured by Asahi Glass Company, Aflex) by means of an applicator, and thus a thin film of the catalyst paste was formed with a uniform thickness. The catalyst paste applied was then dried in a condition of 80 °C. The dried catalyst paste was then cut into pieces of the size of the electrode, and thus the catalyst layer 22 of the cathode 2 was formed. Then, the catalyst layer 22 of the cathode 2 was bonded to one side of the proton-conductive polymer membrane 4 (manufactured by Japan Gore-Tex, Gore-Select 30), and the catalyst layer 12 of the anode 1 was bonded to the other side of the proton-conductive polymer membrane 4, in a condition of thermal bonding, that is, at 150 °C in temperature, at 10 MPa of surface pressure, and for a retention time of 1 minute. After that, the ETFE film on which the catalyst paste for the anode 1 had been applied, and the ETFE film on which the catalyst paste for the cathode 2 had been applied, were both removed. Thus, the catalyst layer 22 of the cathode 2 was bonded to one side of the proton-conductive polymer membrane 4, and the catalyst layer 12 of the anode 1 was bonded to the other side of the proton-conductive polymer membrane 4.

Further, a water-repellent gas diffusion base material (manufactured by Toray Industries, Inc., Carbon Paper) was cut into pieces of the size of the electrode, and thus the gas diffusion layer 10 of the anode 1, and the gas diffusion layer 20 of the cathode 2 were formed. The gas diffusion layer 10 of the anode 1 and the gas diffusion layer 20 of the cathode 2 both have electric conductivity and gas permeability.

Next, in the step of manufacturing a layered unit, the layered unit was formed by arranging the gas diffusion layer 10 of the anode 1, the catalyst layer 12 of the anode 1, the proton-conductive polymer membrane 4, the catalyst layer 22 of the cathode 2, the gas diffusion layer 20 of the cathode 2 in sequential order in a thickness direction. During this step, the layered unit was hot-pressed (thermal bonding) in conditions where the temperature was 140 °C, the surface pressure was 8 MPa, and a retention time was 3 minutes. Thus the membrane electrode assembly 3 (also referred to as an MEA, please refer to Fig.1) according to the first embodiment was formed.

In the first example according to the first embodiment, the membrane electrode assembly 3 manufactured as described above, a gas distribution member 16 for fuel having a flowing channel 14 for fuel, and a gas distribution member 26 for oxidant gas having a flowing channel 24 for oxidant gas were used to assemble a fuel cell A (please refer to Fig. 2). In this case, the gas distribution member 16 for fuel was assembled to face the gas diffusion layer 10 of the anode 1, and the gas distribution member 26 for oxidant gas was assembled to face the gas diffusion layer 20 of the cathode 2. A portion 33 shown in Fig. 2 indicates a sealing member for the gas seal.

Before a catalyst-supporting step, the catalyst layer 12 of the anode 1 of the fuel cell A includes a catalyst metal (platinum-ruthenium), and the catalyst layer 22 of the cathode 2 of the fuel cell A includes a precursor of the catalyst metal (diaminedinitroplatinum). Here, the gas diffusion layer 10 of the anode 1 and the catalyst layer 12 of the anode 1 form the anode 1. Similarly, the gas diffusion layer 20 of the cathode 2 and the catalyst layer 22 of the cathode 2 form the cathode 2.

The anode 1 and the cathode 2 of the fuel cell A are connected through an electric load device 5 (manufactured by Fujitsu Access Ltd., EUL-300JZ) and an electric conductive path 50. The electric load device 5 has a control portion having a function of controlling electric current flowing through the electric conductive path 50 and voltage of the fuel cell A.

Next, the catalyst-supporting step will be explained. Moist hydrogen gas was supplied to the anode 1 through the flowing channel 14 for fuel of the gas distribution member 16 for fuel of the fuel cell A, and moist nitrogen gas was supplied to the cathode 2 through the flowing channel 24 for oxidant gas of the gas distribution member 26 for oxidant gas of the fuel cell A. The reason why hydrogen gas is made moist is to inhibit polarization of the anode 1. The reason why nitrogen gas is made moist is to prevent the proton-conductive polymer membrane and the ion-exchange resin from becoming dried.

In this case, the hydrogen gas reaches the catalyst layer 12 of the anode 1 through the flowing channel 14 for fuel of the gas distribution member 16 for fuel and the gas diffusion layer 10 of the anode 1, and is oxidized to generate proton (H⁺) and electron (e⁻) by catalytic action of the catalyst metal (platinum-ruthenium) in the catalyst layer 12 of the anode 1. The electron (e⁻) generated by the oxidation is transferred to the cathode 2 through the electric conductive path 50. After that, the electron (e⁻) transferred to the cathode 2 induces reduction at the catalyst layer 22 of the cathode 2, thus reducing the precursor of the catalyst metal (diaminedinitroplatinum) included in the catalyst layer 22 of the cathode 2, and precipitating the catalyst metal in the catalyst layer 22 of the cathode 2. In this manner, the catalyst metal is reduced and supported in the catalyst layer 22 of the cathode 2.

In the catalyst-supporting step according to the first example according to the first embodiment, a flow of electric current of approximately 0.1-0.3 Amperes was maintained through the electric conductive path 50 in a condition of constant electric current mode for a duration of 5-15 minutes. In the first example according to the first embodiment, electric current is not forcibly applied between the anode 1 and the cathode 2.

After that, in an operation designed for the purpose of generating electricity, hydrogen gas (utilization 85%) was supplied in a condition of atmospheric pressure to the anode 1 of the fuel cell A, and air (utilization 40%) was supplied, also in the condition of atmospheric pressure, to the cathode 2. In this case, moisture was added to the hydrogen gas at a dew point of 57 °C, and moisture was added to the air at a dew point of 60 °C. The temperature of the fuel cell at this time was set to 77 °C. In this condition, a relation between a flow of electric current and cell voltage of the fuel cell A was measured in the operation for reducing electricity. At the same time, one can reasonably expect that a control portion of the electric load device 5 will control the size of the catalyst metal by controlling the electric current flowing through the electric conductive path 50, and/or the voltage of the fuel cell A.

A first comparative example will now be explained. In the first comparative example, an MEA having a carbon supported platinum catalyst (Pt/C), which has been already reduced by use of hydrogen gas, is utilized. A manufacturing method for a catalyst layer of an anode according to the first comparative example will be explained. For manufacturing the catalyst layer of the anode, a carbon-supported platinum-ruthenium catalyst (manufactured by Tanaka Kikinzoku Kogyo KK, TEC62E58) having platinum-ruthenium 57% by weight supported by conductive carbon black (Ketjenblack EC), purified water, an alcohol-dispersed cation-exchange resin solution (manufactured by Asahi Kasei Corporation, Aciplex SS-1100), and isopropyl alcohol were mixed in a ratio of 1:4:15:2 by weight. Then, the carbon-supported platinum-ruthenium was dispersed so as to be 0.5 - 1.0 µm in terms of a diameter of a secondary particle. Thus, a catalyst paste for the anode was produced.

The catalyst paste was applied onto an ETFE film (manufactured by Asahi Glass Company, Aflex) by means of an applicator, and a thin film of the catalyst paste was thus formed with a uniform thickness. The catalyst paste applied was dried in a condition of 80 °C. The dried catalyst paste was then cut into pieces of a size of an electrode, and thus the catalyst layer of the anode was formed.

Next, a manufacturing method for a catalyst layer of a cathode according to the first comparative example will be explained. For manufacturing the catalyst layer of the cathode, Ketjenblack EC (manufactured by Ketjenblack International Corporation) 7g, isopropyl alcohol 200g, and, as a precursor of catalyst metal a diaminedinitroplatinum nitric acid solution (manufactured by Tanaka Kikinzoku Kogyo KK) were sufficiently mixed and dried. In this case, the Ketjenblack EC (serving as a base) and Pt (serving as the catalyst metal) were weighed to satisfy the following ratio; Ketjenblack EC : Pt = 45:55. After that, in order to deposit platinum particles (the catalyst metal) on the base made of Ketjenblack EC and thus to form carbon supported platinum, the precursor of the catalyst metal was reduced in the hydrogen gas flow in a condition where the temperature of reduction was 160 °C, for a duration of two hours. As mentioned above, in the first comparative example, the platinum included in the catalyst layer of the cathode is formed by being reduced by use of hydrogen gas in a condition where the temperature of the reduction is 160 °C.

The carbon-supported platinum, 5g, alcohol-dispersed cation-exchange resin solution (manufactured by Asahi Kasei Corporation, Aciplex SS-1100), 57g, purified water, 30g, and isopropyl alcohol, 11g, were weighed, and mixed together by means of dispersion equipment. Thus, a catalyst paste for the cathode was produced. The catalyst paste was then applied onto an ETFE film (manufactured by Asahi Glass Corporation, Aflex) by means of an applicator, and thus a thin film of the catalyst paste was formed with a uniform thickness. The catalyst paste applied was then dried in a condition of 80 °C. The dried catalyst paste was cut into pieces of a size of the electrode, and thus the catalyst layer of the cathode was formed. Then, the catalyst layer of the cathode was bonded to one side of a proton-conductive polymer membrane (manufactured by Japan Gore-Tex, Gore-Select 30), and the catalyst layer of the anode was bonded to the other side of the proton-conductive polymer membrane, in a condition of thermal bonding, that is, at a temperature of 150 °C, at a surface pressure of 10 MPa, and for a retention period of one minute. After that, the ETFE film on which the catalyst paste of the anode has been applied, and the ETFE film on which the catalyst paste of the cathode has been applied, were removed. Thus, the catalyst layer of the cathode was bonded to one side of the proton-conductive polymer membrane, and the catalyst layer of the anode was bonded to the other side of the proton-conductive polymer membrane.

Further, a water-repellent gas diffusion base material (manufactured by Toray Industries, Inc., Carbon Paper) was cut into pieces of the size of the electrode, and thus the gas diffusion layer of the anode and the gas diffusion layer of the cathode were formed.

In the same way as in the first example according to the first embodiment, a layered unit was formed by arranging the gas diffusion layer of the anode, the catalyst layer of the anode, the proton-conductive polymer membrane, the catalyst layer of the cathode, the gas diffusion layer of the cathode, in the above-described order, in a thickness direction. The layered unit was hot-pressed (thermal bonding) in a condition where the temperature was 140 °C, the surface pressure was 8 MPa, and the retention time was 3 minutes. Thus the membrane electrode assembly was formed.

The membrane electrode assembly manufactured as described above was assembled with a gas distribution member for fuel and a gas distribution member for oxidant gas, and thus a fuel cell B was assembled. Here, the gas diffusion layer of the anode and the catalyst layer of the anode form the anode. Similarly, the gas diffusion layer of the cathode and the catalyst layer of the cathode form the cathode. Then, in the same manner as the first example according to the first embodiment, in an operation designed for the purpose of generating electricity, hydrogen gas (utilization 85%), in a condition of atmospheric pressure, was supplied to the anode of the fuel cell B, and air (utilization 40%), also in a condition of atmospheric pressure, was supplied to the cathode of the fuel cell B. During this step, moisture was added to the hydrogen gas at a dew point of 57 °C, and moisture was added to the air at a dew point of 60 °C. Temperature of the fuel cell B at this time was set to 77 °C. In this condition, a relation between the flow of electric current and the cell voltage of the fuel cell B was measured.

Next, a second comparative example will be explained. In the second comparative example, an MEA having a carbon-supported platinum-ruthenium catalyst was used. A catalyst layer of an anode according to the second comparative example will be explained. For manufacturing the catalyst layer of the anode, a carbon-supported platinum-ruthenium catalyst (manufactured by Tanaka Kikinzoku Kogyo KK, TEC62E58) having platinum-ruthenium 57% by weight supported by conductive carbon black (Ketjenblack EC) was used. The carbon-supported platinum-ruthenium catalyst, purified water, an alcohol-dispersed cation-exchange resin solution (manufactured by Asahi Kasei Corporation, Aciplex SS-1100), and isopropyl alcohol were mixed in a ratio of 1:4:15:2 by weight. Then, the carbon-supported platinum-ruthenium catalyst was dispersed to be 0.5µm - 1.0 µm in terms of a diameter of a secondary particle. Thus, a catalyst paste for the anode was produced. The catalyst paste was applied onto an ETFE film (manufactured by Asahi Glass Company, Aflex) by means of an applicator, and thus a thin film of the catalyst paste was formed with a uniform thickness. The catalyst paste applied was dried at a condition of 80 °C. The dried catalyst paste was cut into pieces of a size of an electrode, and thus the catalyst layer of the anode was formed.

Next, a catalyst layer of a cathode according to the second comparative example will be explained. For manufacturing the catalyst layer of the cathode, a carbon-supported platinum catalyst (manufactured by Tanaka Kikinzoku Kogyo KK, TECIOE60E) having platinum 55% by weight supported by conductive carbon black (Ketjenblack), purified water, an alcohol-dispersed cation-exchange resin solution (manufactured by Asahi Kasei Corporation, Aciplex SS-1100), and isopropyl alcohol were mixed in a ratio of 1:4:11:2 by weight. Then, the carbon-supported platinum catalyst was dispersed to be 0.5 µm - 1.0 µm in terms of a diameter of a secondary particle. Catalyst paste for the cathode was thus produced.

The catalyst paste was applied onto an ETFE film (manufactured by Asahi Glass Company, Aflex) by means of an applicator, and thus a thin film of the catalyst paste was formed with a uniform thickness. The catalyst paste applied was dried in a condition of 80 °C. The dried catalyst paste was cut into pieces of the size of the electrode, and thus the catalyst layer of the cathode was formed. Then, the catalyst layer of the cathode was bonded to one side of a proton-conductive polymer membrane (manufactured by Japan Gore-Tex, Gore-Select 30), and the catalyst layer of the anode was bonded to the other side of the proton-conductive polymer membrane, in the condition of thermal bonding, that is, at 150 °C in temperature, with a surface pressure of 10 MPa, and for a retention period of one minute. After that, the ETFE film on which the catalyst paste of the anode had been applied, and the ETFE film on which the catalyst paste of the cathode had been applied, were both removed. Thus, the catalyst layer of the cathode was bonded to one side of the proton-conductive polymer membrane, and the catalyst layer of the anode was bonded to the other side of the proton-conductive polymer membrane.

Further, a water-repellent gas diffusion base material (manufactured by Toray Industries, Inc., Carbon Paper) was cut into pieces of the size of the electrode, and thus a gas diffusion layer of the anode, and a gas diffusion layer of the cathode, were formed.

Then, in the same manner as in the first example according to the first embodiment, a layered unit was formed by arranging the gas diffusion layer of the anode, the catalyst layer of the anode, the proton-conductive polymer membrane, the catalyst layer of the cathode, the gas diffusion layer of the cathode in the above-described order in a thickness direction. During this period, the layered unit was hot-pressed (thermal bonding) in conditions where the temperature was 140 °C, the surface pressure was 8 MPa, and a retention time was 3 minutes. Thus a membrane electrode assembly was formed. The membrane electrode assembly manufactured as described above was assembled with a gas distribution member for fuel and a gas distribution member for oxidant gas. Thus, a fuel cell C was assembled. In the same manner as in the first embodiment, in an operation designed for the purpose of generating electricity, hydrogen gas (utilization 85%), in a condition of atmospheric pressure, was supplied to the anode of the fuel cell C, and air (utilization 40%), also in the condition of atmospheric pressure, was supplied to the cathode of the fuel cell C. In this case, moisture was added to the hydrogen gas at a dew point of 57 °C, and moisture was added to the air at a dew point of 60 °C. At this time temperature of the fuel cell C was set to 77 °C. In this condition, a relation between a flow of electric current and the cell voltage of the fuel cell C was measured.

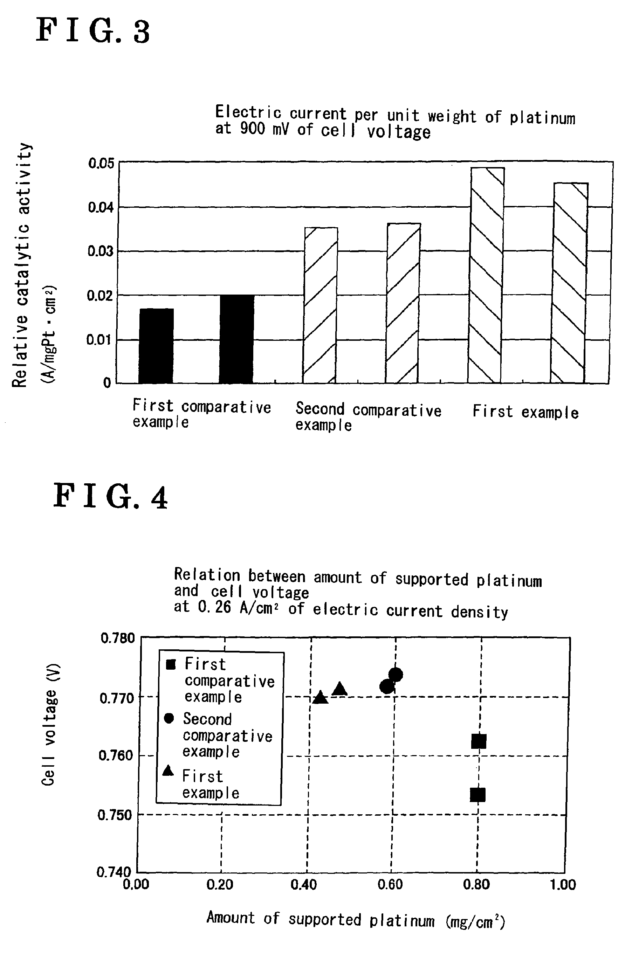

Evaluation of the first example according to the first embodiment, the first comparative example, and the second comparative example will now be explained. Fig. 3 and Fig. 4 represent measured results according to the first example according to the first embodiment, the first comparative example, and the second comparative example described above. Fig. 3 represents the electric current at a time of the cell voltage of 900 mV relative to a unit weight of platinum, in other words, the relative catalytic activity. In the case of each of the first example according to the first embodiment, the first comparative example, and the second comparative example, two fuel cells were manufactured (in other words, n=2). Measured results for each of them are shown in Fig. 3. Fig. 4 represents a relation between the amount of platinum and cell voltage in a condition where current density has been set to 0.26 Ampere/cm² (within the range of a current density for practical purposes).

As shown in Fig. 3, the fuel cell A according to the first example according to the first embodiment showed a higher degree of relative catalytic activity than that of the fuel cells B, C according to the first comparative example and the second comparative example. As shown in Fig. 4, even though the fuel cell A according to the first example includes a lower level of platinum supported in the unit area of the base than that of the fuel cells B, C according to the first and second comparative examples (the amount of platinum supported in the unit area of the base according to the first example is approximately half that of platinum supported in the unit area of the base according to the first comparative example), the fuel cell A according to the first example displayed a higher level of cell voltage than that of the fuel cell B according to the first comparative example. Further, the fuel cell A according to the first example displayed almost the same level of cell voltage as that of the fuel cell C according to the second comparative example. Comparing the fuel cell A according to the first example with the fuel cells B, C according to the first and second comparative examples, as is from the results shown in Fig. 3 and Fig. 4, for purposes of practical use, the fuel cell A according to the first example was superior in terms of both catalytic activity and in terms of output voltage within the range of the current density. In this case, according to the first embodiment, the amount of catalytic metal per unit area relative to capacity per unit area of ion-exchange of the cation-exchange resin is about 0.01-0.05 mg/cm².

A second embodiment will be explained with reference to a second example. A second example according to the second embodiment of the present invention will be explained with reference to the illustrations of drawing figures. The second example according to the second embodiment has basically a similar structure, and similar actions and effects to those of the first example according to the first embodiment. Therefore, the explanation will be based on Fig. 1 and Fig. 2, and emphasis will be placed on differences. The same reference numbers are used for parts which are common to both embodiments. Before a catalyst-supporting step, a catalyst layer 12 of an anode 1 of a fuel cell D according to the second example includes a catalyst metal (platinum-ruthenium), and a catalyst layer 22 of a cathode 2 of the fuel cell D according to the second example includes a precursor of the catalyst metal (diaminedinitroplatinum).

According to the second example, in the catalyst-supporting step, moist hydrogen gas was supplied to the anode 1 of the fuel cell D, and instead of nitrogen gas, moist air in a condition of atmospheric pressure was supplied to the cathode 2 of the fuel cell D. Then, an electric current of approximately 0.1-0.3 Amperes was kept flowing in a condition of constant electric current mode for a duration of 5-15 minutes. In an experiment according to the second example, the precursor of the catalyst metal included in the catalyst layer 22 of the cathode of the fuel cell D was reduced, and thus particles of the catalyst metal (platinum particles) were generated and supported on carbon black as a base.

After that, in an operation designed for the purpose of generating electricity, in the same manner as in the first example, hydrogen gas (utilization 85%), in a condition of atmospheric pressure, was supplied to the anode 1 of the fuel cell D, and air (utilization 40%), also in the condition of atmospheric pressure, was supplied to the cathode 2. In this case, moisture was added to the hydrogen gas at a dew point of 57 °C, and moisture was added to the air at a dew point of 60 °C. At this time, the temperature of the fuel cell D was set to 77°C. In a similar manner that of the first example, the fuel cell D according to the second example also showed a high degree of relative catalytic activity, and a high level of cell voltage.

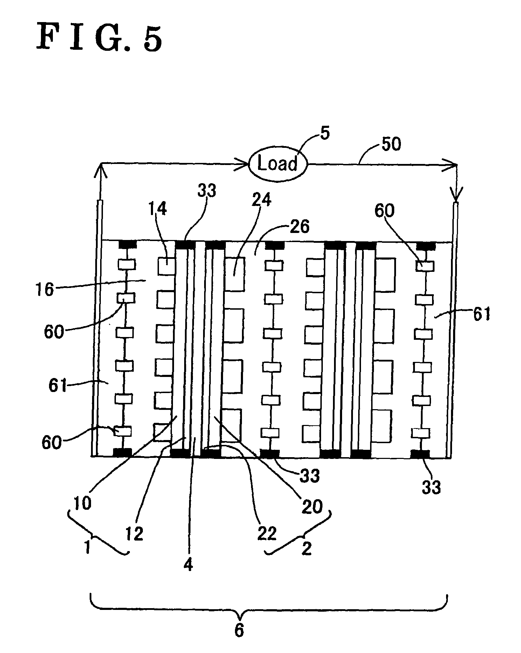

A third embodiment will now be explained with reference to a third example. The third example according to the third embodiment of the present invention will be explained with reference to illustrations of drawing figures. Fig. 5 represents the third example according to the third embodiment, and emphasis will accordingly be placed on differences. Before a catalyst-supporting step, a catalyst layer 12 of an anode 1 of a fuel cell according to the third example according to the third embodiment includes a catalyst metal (platinum-ruthenium), and a catalyst layer 22 of a cathode 2 of the fuel cell includes a precursor of the catalyst metal (diaminedinitroplatinum).

In a step of producing a layered unit, a gas distribution member 16 for supplying fuel is assembled to face a gas diffusion layer 10 of the anode 1 at the layered unit, and a gas distribution member 26 for supplying oxidant gas is assembled to face a gas diffusion layer 20 of the cathode 2 at the layered unit. Thus, a fuel cell stack 6 having plural MEAs is formed. Fig. 5 shows a partial view of the fuel cell stack 6. At each of the backs of the gas distribution member 16 for fuel and the gas distribution member 26 for oxidant gas, a cooling plate 61 having a flowing channel 60 for a flow of cooling water is provided. The catalyst layer 12 of the anode 1 and the catalyst layer 22 of the cathode 2 are both electrically connected through an electric conductive path 50.

In the catalyst-supporting step, hydrogen gas is supplied to the flowing channel 14 for fuel of the gas distribution member 16 for fuel, and nitrogen gas is supplied to the flowing channel 24 for oxidant gas of the gas distribution member 26 for oxidant gas. The hydrogen gas reaches the catalyst layer 12 of the anode 1 through the flowing channel 14 for fuel of the gas distribution member 16 for fuel and the gas diffusion layer 10 of the anode 1.

The hydrogen gas reaching the catalyst layer 12 of the anode 1 is oxidized to generate proton (H⁺) and electron (e⁻) by means of a catalytic action of the catalyst metal (platinum-ruthenium) included in the catalyst layer 12 of the anode. The electron (e⁻) generated by the oxidation is transferred to the cathode 2 through the electric conductive path 50. The electron (e⁻) transferred to the cathode 2 induces reduction at the catalyst layer 22 of the cathode 2 and thus reduces the precursor of the catalyst metal (diaminedinitroplatinum) included in the catalyst layer 22 of the cathode 2. Thus, the catalyst metal is generated and supported in the catalyst layer 22 of the cathode.

The reduction of the precursor of the catalyst metal described above is integrally implemented for the entire fuel cell stack 6. There is accordingly no need to implement a catalyst-supporting step for each of the membrane electrode assemblies 3. As a result, the productivity of the catalyst-supporting step is enhanced. In embodiments other than the third embodiment, the catalyst-supporting step can be integrally implemented for an entire fuel cell stack 6.

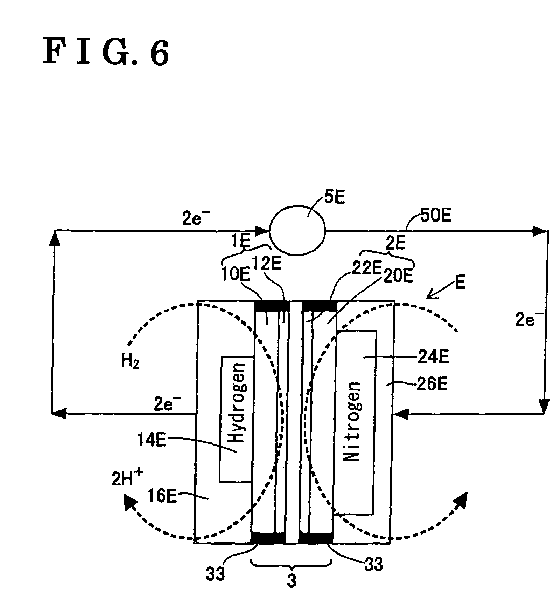

A fourth embodiment of the present invention will now be explained with reference to illustrations of drawing figures. The fourth embodiment will be explained with reference to a fourth example. The fourth embodiment has basically a similar structure, and similar actions and effects to those of the first embodiment, and, once again, emphasis will be placed differences. Fig. 6 represents the fourth example according to the fourth embodiment. The same reference numbers are used for parts which have identical functions. Before a catalyst-supporting step, a catalyst layer 12E of an anode of a fuel cell E according to the fourth embodiment includes a precursor of catalyst metal (diaminedinitroplatinum), and a catalyst layer 22E of a cathode 2E of the fuel cell E includes the precursor of the catalyst metal (diaminedinitroplatinum). The catalyst-supporting step according to the fourth example according to the fourth embodiment includes a first step and a second step. The first step of the catalyst-supporting step will initially be explained. In the first step, hydrogen gas (100-150 °C) is supplied to an anode 1E of the fuel cell E through a flowing channel 14E for fuel of a gas distribution member 16E for supplying fuel. The supplied hydrogen gas reaches the catalyst layer 12E of the anode 1 through a gas diffusion layer 10E of the anode 1. Then, the precursor of the catalyst metal included in the catalyst layer 12E of the anode 1 of the fuel cell E is reduced by use of hydrogen gas. As a result, the catalyst metal (platinum) is generated and supported in the catalyst layer 12E of the anode 1 of the fuel cell.

Next, the second step of the catalyst-supporting step will be explained. Electrodes of the fuel cell E, that is, anode 1E and the cathode 2E, are electrically connected through an electric load device 5E and an electric conductive path 50E. In the second step, hydrogen gas is supplied to the anode 1E through the flowing channel 14E for fuel of the gas distribution member 16E for fuel, and nitrogen gas is supplied to the cathode 2E through a flowing channel 24E for oxidant gas of a gas distribution member 26E for supplying oxidant gas.

The hydrogen gas supplied reaches the catalyst layer 12E of the anode 1E through a gas diffusion layer 10E of the anode 1E, and is oxidized to generate proton (H⁺) and electron (e⁻) by means of a catalytic action of the catalyst metal (platinum) included in the catalyst layer 12E of the anode 1E. The electron (e⁻) generated by the oxidation is transferred to the cathode 2E through the electric conductive path 50E. After that, the electron (e⁻) transferred to the cathode 2E induces reduction at the catalyst layer 22E of the cathode 2E. Thus, the precursor of the catalyst metal (diaminedinitroplatinum) included in the catalyst layer 22E of the cathode is reduced, and the catalyst metal (platinum) is deposited, in other words, generated, and supported in the catalyst layer 22E of the cathode. In this case also, the catalyst-supporting step can be integrally implemented for an entire fuel cell stack 6.

A relevant example will also be explained. According to the first example according to the first embodiment, in the catalyst-supporting step, hydrogen gas is supplied to the anode 1, and nitrogen gas is supplied to the cathode 2. Then, oxidation is carried out at the anode 1, and reduction is induced at the cathode 2 by electron (e⁻) generated by the oxidation. Thus, the precursor of the catalyst metal included in the cathode 2 is reduced, and the catalyst metal is generated. Inversely, in the catalyst-supporting step, nitrogen gas can be supplied to the anode 1, and hydrogen gas can be supplied to the cathode 2. In this case, oxidation is carried out at the cathode 2, and reduction is induced at the anode 1 by electron (e⁻) generated by the oxidation. Thus, the precursor of the catalyst metal included in the anode 1 is reduced and the catalyst metal is generated. Moreover, the present invention should not be deemed to be limited to the embodiments or examples explained in the specification and shown in the drawing figures. Variations can be implemented without deviating from the content of the present invention.

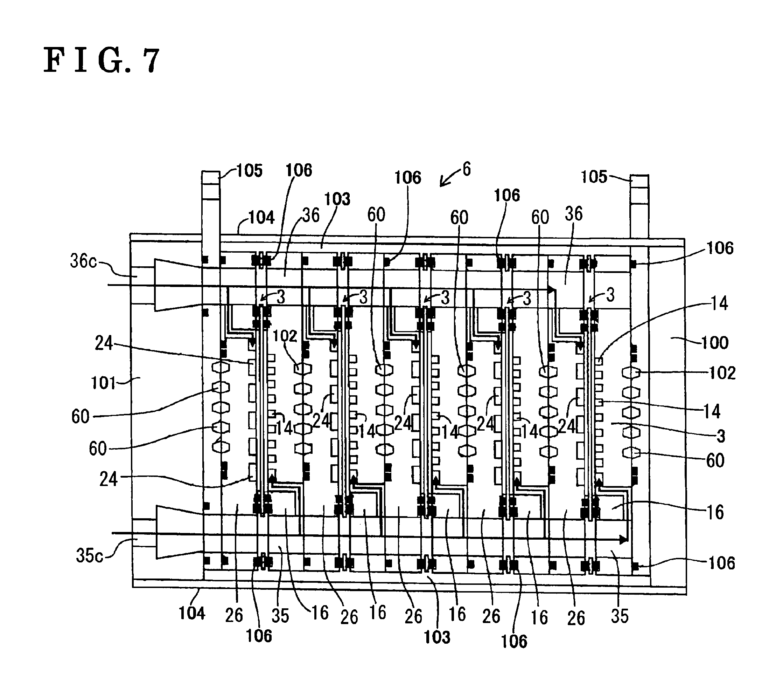

A fifth embodiment of the present invention will now be explained with reference to illustrations of drawing figures. Fig. 7 represents a fuel cell stack 6 according to the fifth embodiment of the present invention. As shown in Fig. 7, the fuel cell stack 6 is structured by assembling plural MEAs 3 with a gas distribution member 16 for supplying fuel, and a gas distribution member 26 for supplying oxidant gas. The fuel cell stack 6 further includes a flow channel 35 for supplying fuel to a flowing channel 14 for fuel of the gas distribution member 16 for fuel, and a flow channel 36 for supplying oxidant gas to a flowing channel 24 for oxidant gas of the gas distribution member 26 for oxidant gas. The MEA 3 is structured in the same way as that shown in Fig. 1.

A catalyst layer 12 of an anode 1 includes a proton-conductive polymer electrolyte and a carbon-supported catalyst. The carbon-supported catalyst is a catalyst supported on a surface of carbon in the shape of microparticles, and serves as an electrically conductive substance (base). A catalyst layer 22 of a cathode 2 includes an electrically conductive substance (such as carbon black), a proton-conductive polymer electrolyte, and a precursor of catalyst metal (diaminedinitroplatinum or chloroplatinic acid, or the like) that can be reduced by use of hydrogen gas.

In the process of reduction, hydrogen gas as reducer gas is supplied to the flow channel 36 for oxidant gas of the fuel cell stack 6. As a result, the precursor of the catalyst metal included in the catalyst layer 22 of the cathode 2 is chemically reduced, and the catalyst metal (platinum) generated from the precursor of the catalyst metal reduced is deposited. According to the fifth embodiment, as described above, the precursor of the catalyst metal included in plural catalyst layers 22 of the cathodes 2 of plural MEAs 3 assembled as the fuel cell stack 6 can be integrally and simultaneously reduced for generating the catalyst metal from the reduction. As a result of this, manufacturing cost can be lowered. Furthermore, for purposes of making uniform the quality of the catalytic metal included in plural catalyst layers 22 of the cathodes 2 of respective MEAs 3, it is advantageous that the precursor of the catalyst metal included in the plural catalyst layers 22 of the cathodes 2 be integrally and simultaneously reduced, and in this way generation of electricity can be enhanced.

In Fig. 7, 100 indicates an end plate, 101 indicates a manifold, 102 indicates a flow channel for a flow of cooling water for the purpose of cooling the fuel cell stack 6, 103 indicates a heat insulating material, 104 indicates a tension-releasing plate, 105 indicates a terminal, and 106 indicates a sealing member. The manifold 101 includes an inlet 35c for a flow of gaseous fuel into the flow channel 35 for fuel, and an inlet 36c for a flow of oxidant gas (generally, air) into the flow channel 36 for oxidant gas. By setting the temperature of water (fluid) flowing through the flow channel 102 for cooling water, the temperature of the fuel cell stack 6 can be set to the at a determined temperature. Therefore, conditions of reduction for precipitating the catalyst metal can also be set to the same certain temperature. Accordingly, for a flow of cooling water provided in the fuel cell stack 6, by setting at a relatively high level the temperature of water (fluid) flowing through the flow channel 102 for cooling water, the temperature of the fuel cell stack 6 can be set at a relatively high level. As a result, temperature conditions of reduction for precipitating the catalyst metal can be set at a relatively high level, and this is advantageous in terms of reducing the length of time required for reduction.

Further, for the flow of cooling water provided in the fuel cell stack 6, by setting the temperature of water (fluid) flowing through the flow channel 102 for cooling water at a relatively low level, the temperature of the fuel cell stack 6 can be set at a relatively low level. As a result, temperature conditions of reduction for precipitating the catalyst metal can be set at a relatively low level, and this is advantageous in terms of preventing a deterioration in the proton-conductive polymer electrolyte membrane 4 of the MEA 3.

In an operation designed for the generation of electricity using the fuel cell stack 6, a gaseous fuel (generally, hydrogen gas, hydrogen-containing gas, or the like) is supplied to the flow channel 35 for fuel, and oxidant gas (generally, air) is supplied to the flow channel 36 for oxidant gas. The fuel supplied to the flow channel 35 for fuel reaches catalyst layer 12 of the anode through the flowing channel 14 for fuel of the gas distribution member 16 for fuel and a gas diffusion layer 10 of the anode 1. Once the fuel has reached the catalyst layer 12 of the anode 1, it is oxidized by the catalyst metal included in the catalyst layer 12 of the anode 1, and thus proton (H⁺) and electron (e⁻) is generated from the hydrogen (H₂). The proton (H⁺) reaches the catalyst layer 22 of the cathode 2 from the catalyst layer 12 of the anode 1 through the proton-conductive polymer membrane 4. The electron reaches the catalyst layer 22 of the cathode 2 from the catalyst layer 12 of the anode 1 through an electric conductive path.

The oxidant gas supplied to the flow channel 36 for oxidant gas for supplying oxidant gas reaches the catalyst layer 22 of the cathode 2 through the flowing channel 24 for oxidant gas for the flow of oxidant gas of the gas distribution member 26 for oxidant gas and a gas diffusion layer 20 of the cathode 2. Accordingly, at the catalyst layer 22 of the cathode 2, reduction of oxygen in the reaction with proton (H⁺) and the electron (e⁻) is accelerated by the catalyst metal included in the catalyst layer 22 of the cathode 2, and water is thus generated. Electricity is accordingly generated.

Next, examples according to the fifth embodiment of the present invention will be explained. First, for purposes of clarification, a third comparative example will be explained.

According to the third comparative example, hydrogen reduction is undertaken in conditions of 140 °C. According to the third comparative example, for manufacturing the catalyst layer of the anode, carbon-supported platinum-ruthenium catalyst (manufactured by Tanaka Kikinzoku Kogyo KK, TEC62E58) having platinum-ruthenium 57% by weight supported by conductive carbon black (Ketjenblack, manufactured by Ketjenblack International Corporation) was used. The carbon-supported platinum-ruthenium catalyst, purified water, an alcohol-dispersed cation-exchange resin solution (manufactured by Asahi Kasei Corporation, Aciplex SS-1100), and isopropyl alcohol were mixed in a ratio of 1:4:15:2 by weight. Thus, a catslyst paste for the anode was produced. In the catalyst paste, the carbon-supported platinum-ruthenium catalyst is dispersed to be 0.5-1.0 µm in terms of a diameter of a secondary particle.

The catalyst paste for the anode was applied onto an ETFE film (manufactured by Asahi Glass Corporation, Aflex) by means of an applicator, and thus a thin film of the catalyst paste was formed with a uniform thickness. The catalyst paste applied was dried in a condition of 80 °C. The dried catalyst paste was cut into pieces of a size of an electrode, and thus the catalyst layer of the anode was formed.

For manufacturing the catalyst layer of the cathode, Ketjenblack, 2.5 g, as a precursor of the catalyst a diaminedinitroplatinum nitric acid solution (manufactured by Tanaka Kikinzoku Kogyo KK), 36 g, an alcohol-dispersed cation-exchange resin solution (manufactured by Asahi Kasei Corporation, Aciplex SS-1100), 63g, isopropyl alcohol, 5g, and purified water, 3g, were well mixed, and a paste for the cathode was thereby formed. The paste for the cathode was applied onto an ETFE film (manufactured by Asahi Glass Company, Aflex) by means of an applicator, and a thin film of the catalyst paste was thereby formed with a uniform thickness. The catalyst paste applied was dried in a condition of 80°C. The dried catalyst paste was cut into pieces of a size of an electrode. The pieces were put into a furnace for hydrogen reduction at a temperature of 140 °C, and the flow rate of hydrogen gas was 2 litters/minute, for a duration of three hours. Thus, platinum particles were deposited, generated and supported on the base made of carbon black, and the catalyst layer of the cathode thereby was produced.

Further, a water-repellent gas diffusion base material (manufactured by Toray Industries, Inc., Carbon Paper) was cut into pieces of the size of the electrode, and thus the gas diffusion layer of the anode, and the gas diffusion layer of the cathode were formed. Then, the ETFE film on which the catalyst paste of the anode had been applied, and the ETFE film on which the catalyst paste of the cathode had been applied, were removed. Next, a layered unit was formed by arranging the gas diffusion layer of the anode, the catalyst layer of the anode, the proton-conductive polymer membrane (manufactured by Japan Gore-Tex, Gore-Select 30), the catalyst layer of the cathode, the gas diffusion layer of the cathode in sequential order. The layered unit was hot-pressed (thermal bonding) in a condition where the temperature was 140 °C, the surface pressure was 8 MPa (≅80 kgf/cm²), and the retention time was 3 minutes. A MEA was thus formed, and a fuel cell stack F was assembled using the MEA formed as described above.

Hydrogen gas (utilization 85%), in a condition of atmospheric pressure, was supplied to the anode of the fuel cell stack F, and air (utilization 40%), also in a condition of atmospheric pressure, was supplied to the cathode of the fuel cell stack F, for an operation designed for the purpose of generating electricity. In this condition, a relation between a flow of electric current and the cell voltage of the fuel cell stack F was investigated. Moisture was added to the hydrogen gas at a dew point of 57 °C. Moisture was also added to the air at a dew point at 60 °C. In an operation designed for the purpose of generating electricity, the temperature of the fuel cell stack was set to 77 °C.

A fifth example according to the fifth embodiment will now be explained. In the fifth example, the precursor of the catalyst metal in the fuel cell stack is reduced by use of hydrogen gas in a condition where the temperature of the fuel cell stack is 80 °C.

According to the fifth example according to the fifth embodiment, for purpose of producing a catalyst layer of an anode, similar to that of the third comparative example, a carbon-supported platinum-ruthenium catalyst (manufactured by Tanaka Kikinzoku Kogyo KK, TEC62E58) having platinum-ruthenium 57% by weight supported by conductive carbon black (Ketjenblack) was used. Then, in a similar way to that of the third comparative example, the carbon-supported platinum-ruthenium catalyst, purified water, an alcohol dispersed cation-exchange resin solution (manufactured by Asahi Kasei Corporation, Aciplex SS-1100), and isopropyl alcohol were mixed in a ratio of 1:4:15:2 by weight. Thus, a catalyst paste for the anode was produced. In this case, the carbon-supported platinum-ruthenium catalyst was dispersed so as to be 0.5-1.0 µm in terms of a diameter of a secondary particle.

The catalyst paste for the anode was applied onto an ETFE film (manufactured by Asahi Glass Company, Aflex) by means of an applicator, and a thin film of the catalyst paste was thus formed with a uniform thickness. The catalyst paste applied was dried in a condition of 80 °C. The dried catalyst paste was cut into pieces of a size of an electrode, and thus the catalyst layer of the anode was formed.

For producing a catalyst layer of the cathode, Ketjenblack (manufactured by Ketjenblack International Corporation), 2.5 g, as a precursor of the catalyst metal a diaminedinitroplatinum nitric acid solution (manufactured by Tanaka Kikinzoku Kogyo KK), 36g, an alcohol-dispersed cation-exchange resin solution (manufactured by Asahi Kasei Corporation, Aciplex SS-1100), 63g, isopropyl alcohol, 5g, and purified water, 3g, were sufficiently mixed. Thus, a catalyst paste for the cathode was produced. The catalyst paste was applied onto an ETFE film (manufactured by Asahi Glass Company, Aflex) by means of an applicator, and thus a thin film of the catalyst paste was formed with a uniform thickness. The catalyst paste for the cathode applied was dried in a condition of 80 °C. The dried catalyst paste was cut into pieces of a size of the electrode, and thus the catalyst layer of the cathode was formed.

Further, a water-repellent porous gas diffusion base material (manufactured by Toray, Carbon Paper) was cut into pieces of a size of the electrode, and thus a gas diffusion layer of the anode and a gas diffusion layer of the cathode were formed. Then, the ETFE film on which the catalyst paste of the anode had been applied, and the ETFE film on which the catalyst paste of the cathode had been applied, were removed. A layered unit was formed by arranging the gas diffusion layer of the anode, the catalyst layer of the anode, a proton conductive polymer membrane (manufactured by Japan Gore-Tex, Gore-Select 30), the catalyst layer of the cathode, the gas diffusion layer of the cathode, in sequential order. In a similar way to that of the third comparative example, the layered unit was hot-pressed (thermal bonding) in a condition where the temperature was 140°C, the surface pressure was 8 MPa (≅80 kgf/cm²), and the retention time was 3 minutes. Thus the MEA was formed, and a fuel cell stack G was assembled using the MEA formed as described above.

Hydrogen gas (reducer gas) was supplied to the cathode of the fuel cell stack G at a flow rate of 2 litters/minute for a duration of 3 hours, and thus the precursor of the catalyst metal included in the cathode was reduced, and the platinum particles were deposited, generated and supported on a base made of carbon black, of the catalyst layer of the cathode. At this time, the temperature of the fuel cell stack G was set at 80 °C. This temperature was set by setting a temperature of water supplied to a flow channel for cooling water of the fuel cell stack G. In this case, there is no need to reduce the catalyst layer of the anode by use of hydrogen gas because the catalyst layer of the anode already has platinum-ruthenium as a catalyst metal of the anode.

After the reduction, the fuel cell stack G was sufficiently purged by use of nitrogen gas. After that, hydrogen gas (utilization 85%), in a condition of atmospheric pressure, was supplied to the anode, and air (utilization 40%), also in a condition of atmospheric pressure, was supplied to the cathode, for an operation designed in the same way as that in the third comparative example for the purpose of generating electricity. In this condition, a relation between a flow of electric current and the cell voltage of the fuel cell stack G was investigated. In this case, moisture was added to the hydrogen gas at a dew point of 57 °C, and moisture was also added to the air at a dew point of 60 °C. Temperature of the fuel cell stack G, in an operation designed for purposes of generating of electricity, was set to 77 °C.

A sixth example according to the fifth embodiment will be explained. In the sixth example, the precursor of the catalyst metal in the fuel cell stack is reduced by use of hydrogen gas in a condition where the temperature of the fuel cell stack is 70 °C. In the sixth example, a catalyst layer of an anode, a catalyst layer of a cathode, a gas diffusion layer of the anode, and a gas diffusion layer of the cathode were manufactured in the same manner as in the fifth example according to the fifth embodiment. Then, an MEA was assembled in the same manner as in the fifth example of the fifth embodiment. A fuel cell stack H was also assembled in the same way as in the fifth example of the fifth embodiment.

Hydrogen gas was supplied to the cathode of the fuel cell stack H at a flow rate of 2 litters/minute for a duration of 3 hours, and thus a precursor of catalyst metal included in the cathode according to the sixth example of the fifth embodiment was reduced, and platinum particles were deposited, generated and supported on a base, made of carbon black, of the catalyst layer of the cathode. The temperature of the fuel cell stack H was at this time set to 70 °C. This temperature was set by setting a temperature of water supplied to a flow channel for cooling water of the fuel cell stack H. In this case, there is no need to reduce the catalyst layer of the anode by use of hydrogen gas because the catalyst layer of the anode already has platinum-ruthenium as a catalyst metal of the anode.

After the reduction, the fuel cell stack H was sufficiently purged by use of nitrogen gas. After that, in the same way as in the third comparative example, hydrogen gas (utilization 85%), in a condition of atmospheric pressure, was supplied to the anode of the fuel cell stack H, and air (utilization 40%), also in a condition of atmospheric pressure, was supplied to the cathode, for an operation designed to generate electricity. In this condition, a relation between a flow of electric current and cell voltage of the fuel cell stack H was investigated. In this case, moisture was added to the hydrogen gas at a dew point of 57°C, and moisture was also added to the air at a dew point of 60 °C. In an operation designed to generate electricity, the temperature of the fuel cell stack H was set to 77 °C.

A seventh example according to the fifth embodiment will be now explained. In the seventh example, the precursor of the catalyst metal in the fuel cell stack is reduced by use of hydrogen gas in a condition where the temperature of the fuel cell stack is 60 °C. In the seventh example, a catalyst layer of an anode, a catalyst layer of a cathode, a gas diffusion layer of the anode, and a gas diffusion layer of the cathode were manufactured in the same way as in the fifth example according to the fifth embodiment. A fuel cell stack I was assembled in the same way as in the fifth example according to the fifth embodiment.

Hydrogen gas was supplied to the cathode of the fuel cell stack I at the flow rate of 2 litters/minute for a duration of 3 hours, and thus a precursor of catalyst metal included in the cathode according to the seventh example of the fifth embodiment was reduced, and platinum particles were deposited, generated and supported on a base, made of carbon black, of the catalyst layer of the cathode. The temperature of the fuel cell stack I was at this time set to 60 °C. This temperature was set by setting a temperature of water supplied to a flow channel for cooling water of the fuel cell stack I.

After the reduction, the fuel cell stack I was sufficiently purged by use of nitrogen gas. After that, hydrogen gas (utilization 85%), in a condition of atmospheric pressure, was supplied to the anode of the fuel cell stack I, and air (utilization 40%), also in a condition of atmospheric pressure, was supplied to the cathode for an operation designed to generate electricity. In this condition, a relation between a flow of electric current and the cell voltage of the fuel cell stack I was investigated. In this case, moisture was added to the hydrogen gas at a dew point of 57 °C, and moisture was also added to the air at a dew point of 60 °C. The temperature of the fuel cell stack I, for an operation designed to generate electricity, was set to 77 °C.

An eighth example according to the fifth embodiment will also be explained. In the eighth example, the precursor of the catalyst metal in the fuel cell stack is reduced by use of hydrogen gas in a condition where the temperature of the fuel cell stack is 30 °C. In the eighth example, a catalyst layer of an anode, a catalyst layer of a cathode, a gas diffusion layer of the anode, and a gas diffusion layer of the cathode were all manufactured in the same manner as in the fifth example according to the fifth embodiment. Then, an MEA was assembled in the same way as in the fifth example according to the fifth embodiment. A fuel cell stack E was assembled in the same way as in the fifth example according to the fifth embodiment.

Hydrogen gas was supplied to the cathode of the fuel cell stack J at a flow rate of 2 litters/minute for a duration of 3 hours, and thus a precursor of catalyst metal included in the cathode according to the eighth example according to the fifth embodiment was reduced, and platinum particles were deposited, generated and supported on a base, made of carbon black, of the catalyst layer of the cathode. The temperature of the fuel cell stack J was on this occasion set at a relatively low (30 °C). This temperature was set by setting a temperature of water supplied to a flow channel for cooling water of the fuel cell stack J.

After the reduction, the fuel cell stack J was sufficiently purged by use of nitrogen gas. After that, hydrogen gas (utilization 85%), in a condition of atmospheric pressure, was supplied to the anode of the fuel cell stack J, and air (utilization 40%), also in a condition of atmospheric pressure, was supplied to the cathode for an operation designed to generate electricity. In this condition, a relation between the flow of electric current and cell voltage of the fuel cell stack J was investigated. In this case, moisture was added to the hydrogen gas at a dew point of 57 °C, and moisture was also added to the air at a dew point of 60 °C. The temperature of the fuel cell stack J, for an operation designed to generate electricity, was set to 77 °C.

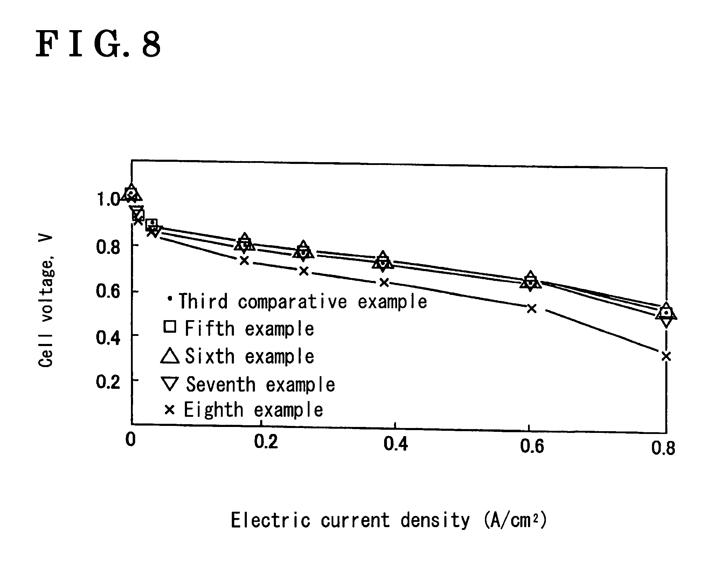

Investigation results of operations for generating electricity according to the third comparative example, the fifth, sixth, seventh, and eighth examples according to the fifth embodiment will now be explained. Fig. 8 represents a graph indicating the investigation results of the fuel cell stacks F-J according to the third comparative example, and the fifth, sixth, seventh and eighth examples according to the fifth embodiment, an operation for generating electricity. As shown in Fig. 8, the fuel cells according to the fifth, sixth, seventh and eighth examples according to the fifth embodiment exhibited a high level of cell voltage, and were satisfactorily performed. In particular, the fuel cells according to the fifth, sixth, and seventh examples of the fifth embodiment demonstrated a high level of cell voltage, and were satisfactorily performed. The fuel cell stack F according to the third comparative example performed satisfactorily in terms of generating of electricity. However, reduction for generating a catalyst by the reduction was not integrally implemented in the condition of the fuel cell stack. Accordingly, the fuel cell stack according to the third comparative example does not achieve a satisfactory level of productivity. On the contrary, the fuel cell stacks according to the fifth, sixth, seventh, and eighth examples according to the fifth embodiment all resulted in a satisfactory level of productivity.

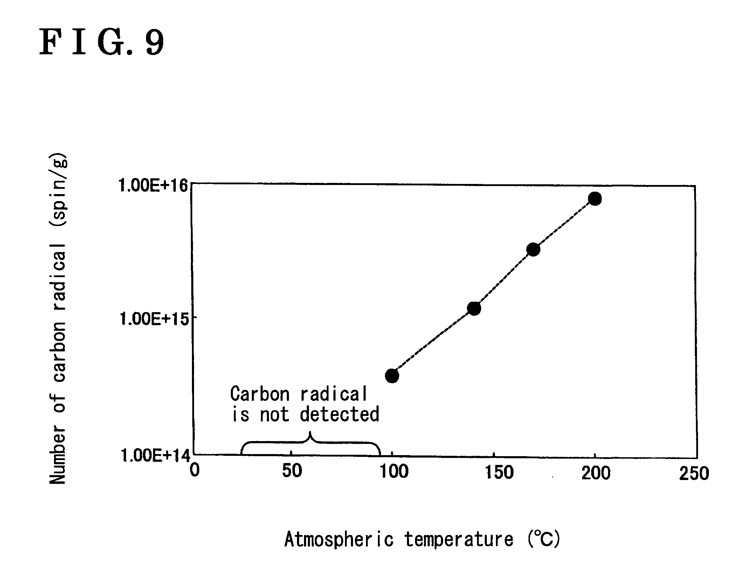

Further, the degree of deterioration in the proton-conductive polymer membrane was investigated in cases where there are variations in the atmospheric temperature of the reduction. Fig. 9 shows results of the investigation concerning the degree of deterioration. As is shown in Fig. 9, commensurate with the degree of increase in atmospheric temperature, the degree of deterioration in the membrane increases, and there has also been a tendency for carbon radical generated in the membrane to increase. For purposes of protecting the membrane, it is preferable to set the atmospheric temperature is less than Tg of the proton-conductive polymer membrane (Tg: glass transition temperature of the proton-conductive polymer membrane Gore-Select 30 is 150-160°C.). In particular, a temperature between a room temperature (20 °C) and 120 °C is preferable. More particularly, because a carbon radical was not detected in conditions of an atmospheric temperature of 25-90 °C, for purposes of restricting the degree of deterioration in the membrane, it is preferable that the atmospheric temperature be in a range of from 25 °C to 95 °C. During this investigation, measurement of the carbon radical was carried out by means of an electron spin resonance spectroscopy (ESR).

The sixth embodiment of the present invention will be explained with reference to illustrations of drawing figures. The sixth embodiment has basically a similar structure, and similar actions and effects as those of the fifth embodiment. Therefore, an explanation will be based on Fig. 1 and Fig. 7. According to the sixth embodiment, both a catalyst layer 12 of an anode 1 and a catalyst layer 22 of a cathode 2 are structured to include an polymer electrolyte, an electrically conductive substance in the shape of a microparticle (carbon), and diaminedinitroplatinum as a precursor of a catalyst metal that can be reduced. Then, in a similar manner to the fifth embodiment, as shown in Fig. 7, a fuel cell stack 6 is structured by assembling plural MEAs 3 with a gas distribution member 16 for supplying fuel, and a gas distribution member 26 for supplying oxidant gas.

In the process of a reduction, hydrogen gas (gauge pressure: 0 MPa) is supplied as reducer gas to a flow channel 36 for oxidant gas, and a flow channel 35 for fuel of the fuel cell stack 6. As a result, the precursor of the catalyst metal included in the catalyst layer 22 of the cathode 2 and the catalyst layer 12 of the anode 1 is chemically reduced. Thus, the catalyst metal (platinum) is deposited in the catalyst layer 22 of the cathode 2, and in the catalyst layer 12 of the anode 1.

Also in the embodiment, the precursor of the catalyst metal included in the plural catalyst layers 22 of the cathode 2 and the plural catalyst layers 12 of the anode 1 of plural MEAs 3 assembled as the fuel cell stack 6 can be integrally and simultaneously reduced. As a result of this, manufacturing costs can be lowered. Further, the precursor of the catalyst metal included in the plural catalyst layers 22 of the cathode 2, and in the plural catalyst layers 12 of the anode 1, can be integrally and simultaneously reduced, and this is advantageous in terms of making uniform quality of the catalyst metal included in the plural catalyst layers 22 of the cathode 2 and the plural catalyst layers 12 of the anode 1. Thus generation of electricity can be enhanced.

According to an aspect of the present invention, a catalyst supporting method for a polymer electrolyte fuel cell includes steps of a making step for making a layered unit by arranging, in sequential order, a gas diffusion layer of an anode, a catalyst layer of the anode, a proton conductive polymer membrane, a catalyst layer of a cathode, and a gas diffusion layer of the cathode, a connecting step for electrically connecting the catalyst layer of the anode of the layered unit to the catalyst layer of the cathode of the layered unit through an electric conductive path, and a catalyst-supporting step for generating a catalyst metal by a process of reduction of a precursor of the catalyst metal included in one of the anode and the cathode, by a process of oxidation induced at the other of the anode and the cathode, and by a process of reduction at the one of the anode and the cathode with electrons generated during the oxidation.

In the catalyst-supporting step, oxidation is implemented in the other of the anode and the cathode. Electrons generated in the process of oxidation are utilized in reduction implemented in the one of the anode and the cathode. Then, the precursor of the catalyst metal included in the one of the anode and the cathode is reduced, and thus the catalyst metal is generated. The catalyst layer of the anode and the catalyst layer of the cathode, before implementation of the catalyst-supporting step, means the catalyst layer of the anode and the catalyst layer of the cathode including the precursor of the catalyst metal before becoming the catalyst metal. As an example of the precursor of the catalyst metal, metallic salt including catalyst metal can be used. Specifically, amine complex salt including catalyst metal, chloride salt, nitrite salt, and sulfate salt can be used. As the precursor of the catalyst metal, when platinum is used as the elements of the platinum group, amine complex ions, that is, [Pt(NH₃)₄]²⁺, [Pt(NH₃)₆]⁴⁺, [PtCl(NH₃)₅]³⁺, [Pt(NO₂)₂(NH₃)₂], or the like, can be used. As the precursor of the catalyst metal, when ruthenium is used, [Ru(NH₃)₆]³⁺, ruthenium nitrate, and dodecacarbonyltriruthenium, or the like, can be used. As the catalyst metal, elements of the platinum group, in other words, platinum, ruthenium, rhodium, and iridium, or the like, can be used.

The layered unit can be formed by arranging the gas diffusion layer of the cathode, the catalyst layer of the cathode, the proton-conductive polymer membrane, the catalyst layer of the anode, and the gas diffusion layer of the anode in the sequential order from one of the anode and the cathode to the other of the anode and the cathode. On the other hand, the layered unit can be formed by arranging the gas diffusion layer of the anode, the catalyst layer of the anode, the proton-conductive polymer membrane, the catalyst layer of the cathode, and the gas diffusion layer of the cathode in the sequential order from one of the anode and the cathode to the other of the anode and the cathode.

According to a further aspect of the present invention, in the catalyst-supporting step, hydrogen gas or a hydrogen-containing gas is supplied to the other of the anode and the cathode. In the catalyst-supporting step, the hydrogen gas or the hydrogen-containing gas supplied to the other of the anode and the cathode is oxidized by the catalyst metal supported in the other of the anode and the cathode, and thus proton (2H⁺) and electron (2e⁻) are generated. The electron generated in the process of oxidation is transferred from the other of the anode and the cathode to the one of the anode and the cathode through the electrically conductive path. The transferred electron induces reduction in the one of the anode and the cathode. As a result, the precursor of the catalyst metal included in the one of the anode and the cathode is reduced, and thus the catalyst metal is generated.

According to a further aspect of the present invention, in the catalyst-supporting step, electric current flowing through the electric conductive path and/or voltage of the polymer electrolyte fuel cell is controlled by means of a control portion for controlling the electric current and/or the voltage provided at the electric conductive path. By controlling, by means of the control portion, the electric current flowing in the electrically conductive path, or the voltage, there is a reasonable expectation that a size of the catalyst metal can be controlled. Further, by controlling the electric current and/or the voltage, the generation of catalyst particles can be controlled.

According to a further aspect of the present invention, in the catalyst-supporting step, inert gas or air is supplied to the one of the anode and the cathode. Even when electron (2e⁻) is supplied to the one of the anode and the cathode, the inert gas is not reduced. Therefore, the precursor of the catalyst metal can be efficiently reduced in the one of the anode and the cathode. As example of the inert gas, nitrogen gas and argon gas, or the like, can be used. Even in a case where air is used instead of the inert gas, in the investigation carried out according to the second embodiment of the present invention, the precursor of the catalyst metal was reduced in the one of the anode and the cathode, and the catalyst metal was generated in the one of the anode and the cathode.

According to a further aspect of the present invention, in the making step of the layered unit, a plurality of the layered units is assembled with a gas distribution member to form a fuel cell stack, and the catalyst-supporting step is implemented for the entire fuel cell stack. In this case, the catalyst-supporting step can be implemented for an entire fuel cell stack, and productivity accordingly advanced.

According to a further aspect of the present invention, the catalyst layer, in which the catalyst is supported by reducing the catalyst precursor, of either the anode or the cathode consists of the catalyst metal and the cation-exchange resin, and loading amount of catalyst metal calculated in form of the same cation as the catalyst precursor is an excess of 0.1-2.0 mg/cm² over ion exchange capacity of the cation-exchange resin. The composition can be applied as the catalyst layer of the anode and/or the catalyst layer of the cathode.

In this case, a portion of the cations including the catalyst metal can be absorbed into the cation-exchange resin by means of an ion-exchange reaction between pairs of ions included in the cation-exchange resin and the cations including the catalyst metal. The remaining cations including the catalyst metal are absorbed by carbon black (an electrically conductive substance) having electric conductivity. After that, the catalyst-supporting step is undertaken, and thus the precursor of the catalyst metal is reduced, and particles of the catalyst metal are generated and supported in both the cation-exchange resin and in the carbon black. In other words, the precursor of the catalyst metal reduced is generated in the cation-exchange resin and the carbon black as microparticles of the catalyst metal.

By controlling the concentration of each component included in the composition, or by controlling the amount of precursor of the catalyst metal included in the composition, the amount of catalyst metal generated both in the cation-exchange resin and in the carbon black can be controlled. In a case where the catalyst metal calculated in form of the same cation as the catalyst precursor, an amount of which is an excess of 0.1-2.0 mg/cm² over ion exchange capacity of the cation-exchange resin, is supported in the proton-ion-exchange resin and the carbon black, the amount of supported catalyst metal is increased, and this can result in an increase in catalytic activity. As examples of the cation-exchange resin, a cation-exchange resin including a sulfonic group, and a cation-exchange resin including a carboxylic group can be used. Specifically, the cation-exchange resin including a sulfonic group is preferable because ion-exchange reaction with cations including the catalyst metal tends to occur more easily in the case of a cation-exchange resin including the sulfonic group, or when the resistance of the cation-exchange resin including the sulfonic group is low.

According to a further aspect of the present invention, a catalyst supporting method for a polymer electrolyte fuel cell includes steps of a first step for arranging, in a sequential order, a gas diffusion layer of an anode, a catalyst layer of the anode, a proton-conductive polymer membrane, a catalyst layer of a cathode, and a gas diffusion layer of the cathode, and for forming a plurality of membrane electrode assemblies including a precursor of a catalyst metal which can be reduced in at least one of the catalyst layer of the anode and the catalyst layer of the cathode, a second step for assembling a gas distribution member for supplying fuel to the catalyst layer of the anode through the gas diffusion layer of the anode, a gas distribution member for supplying oxidant gas to the catalyst layer of the cathode through the gas diffusion layer of the cathode, and the membrane electrode assembly, to form a fuel cell stack having a flow channel for supplying the fuel to the gas distribution member for the fuel, and a flow channel for supplying the oxidant gas to the gas distribution member for the oxidant gas, and a third step for supplying the reducer gas to at least one of the catalyst layer of the anode and the catalyst layer of the cathode through at least one of the flow channel for supplying the fuel or the flow channel for supplying the oxidant gas to reduce the precursor of the catalyst metal included in at least the one of the catalyst layer of the anode and the catalyst layer of the cathode and thus to deposit the catalyst metal in at least the one of the catalyst layer of the anode or the catalyst layer of the cathode.

In the aspect of the present invention, the fuel cell stack is structured by assembling the membrane electrode assembly with the gas distribution member for fuel and the gas distribution member for oxidant gas. After that, the reducer gas is supplied to at least one of the catalyst layer of the anode and the catalyst layer of the cathode through at least one of the flow channel for fuel and the flow channel for oxidant gas of the fuel cell stack. As a result, the precursor of the catalyst metal included in at least the one of the catalyst layer of the anode and the catalyst layer of the cathode is chemically reduced. Thus, the catalyst metal is generated in at least the one of the catalyst layer of the anode and the catalyst layer of the cathode. In this fashion, the precursor of the catalyst metal included in the plural catalyst layers of the anode and/or the plural catalyst layers of the cathode of plural MEAs assembled as the fuel cell stack can be integrally and simultaneously reduced for purposes of generating the catalyst metal.

In this case, as a reducer gas, hydrogen gas or a hydrogen-containing gas can be used. As pressure conditions for the reducer gas (gauge pressure), 0 MPa-5 MPa, in particular, 0 MPa-1 MPa can, for example, be used, but the invention is not limited to the such conditions.

According to the aspect of the present invention, it is preferable that the third step be implemented in a condition where the temperature of the fuel cell stack is restricted to between a room temperature of 20 °C and 120 °C, a condition which is advantageous in terms of inhibiting a deterioration in the proton-conductive polymer membrane. In a case where a flow channel for cooling water is provided at the fuel cell stack, the above-mentioned temperature control can be carried out with a flowing fluid with a temperature restricted to a range of from a room temperature of 20 °C to 120 °C throughout the flow channel for cooling water. As examples of the fluid, both water and air can be used. If the temperature is set at a low level, the period required for reduction is increased, and this results in a drop in the level of productivity. If the temperature is set at a high level, deterioration of the proton-conductive polymer membrane can easily occur. Considering all the above circumstances, the third step can be implemented in a condition where the temperature of the fuel cell stack is maintained at between 40 °C and 120 °C, 50 °C and 110 °C, 60 °C and 100 °C, or, 60 °C and 80°C.

According to a further aspect of the present invention, a catalyst-supporting method for a polymer electrolyte fuel cell having a high catalytic activity and a high cell voltage can be provided. According to a further aspect of the present invention, a precursor of catalyst metal included in plural catalyst layers of anodes and/or plural catalyst layers of cathodes can be integrally and simultaneously reduced, a method which is advantageous in terms of reducing manufacturing costs.

According to a further aspect of the present invention, because plural catalyst layers of anodes and/or plural catalyst layers of cathodes can be integrally and simultaneously reduced, it is advantageous to make uniform the quality of the catalyst included in the catalyst layers of plural membrane electrode assemblies, an arrangement which can contribute to enhance generation of electricity.

The present invention can be utilized for a fuel cell type system for generation of electricity for a vehicle, for a system for stationing, for an electric device, for an electronic device, or for a various kinds of mobile device.

A catalyst supporting method for a polymer electrolyte fuel cell for supporting a catalyst metal in a catalyst layer (12) of an anode (1) and a catalyst layer (22) of a cathode (2) is characterized in that the catalyst supporting method for a solid polymer fuel cell includes steps of a making step for making a layered unit by arranging, in sequential order, a gas diffusion layer (10) of the anode (1), the catalyst layer (12) of the anode (1), a proton-conductive polymer membrane (4), the catalyst layer (22) of the cathode (2), and a gas diffusion layer (20) of the cathode (2), a connecting step for electrically connecting the catalyst layer (12) of the anode (1) of the layered unit to the catalyst layer (22) of the cathode (2) of the layered unit through an electric conductive path (50), and a catalyst-supporting step for generating the catalyst metal by a process of reduction of a precursor of the catalyst metal included in one of the anode and the cathode, by a process of oxidation induced at the other of the anode (1) and the cathode (2), and a process of reduction at the one of the anode (1) and the cathode (2) with electrons generated during the oxidation.

## Claims

1. A catalyst supporting method for a polymer electrolyte fuel cell for supporting a catalyst metal in a catalyst layer (12) of an anode (1) and a catalyst layer (22) of a cathode (2), **characterized in that**
the catalyst supporting method for a solid polymer fuel cell includes steps of
a making step for making a layered unit by arranging, in sequential order, a gas diffusion layer (10) of the anode (1), the catalyst layer (12) of the anode (1), a proton-conductive polymer membrane (4), the catalyst layer (22) of the cathode (2), and a gas diffusion layer (20) of the cathode (2),
a connecting step for electrically connecting the catalyst layer (12) of the anode (1) of the layered unit to the catalyst layer (22) of the cathode (2) of the layered unit through an electric conductive path (50), and
a catalyst-supporting step for generating the catalyst metal by a process of reduction of a precursor of the catalyst metal included in one of the anode and the cathode, by a process of oxidation induced at the other of the anode (1) and the cathode (2), and a process of reduction at the one of the anode (1) and the cathode (2) with electrons generated during the oxidation.

2. The catalyst supporting method for a polymer electrolyte fuel cell according to claim 1, wherein
in the catalyst-supporting step, hydrogen gas or a hydrogen-containing gas is supplied to the other of the anode (1) and the cathode (2).

3. The catalyst supporting method for a polymer electrolyte fuel cell according to any one of claims 1-2, wherein
in the catalyst-supporting step, oxidation-reduction catalyst current flowing through the electric conductive path (50) and/or voltage of the polymer electrolyte fuel cell is controlled by means of a control portion for controlling the oxidation-reduction catalyst current and/or the voltage provided at the electric conductive path (50).

4. The catalyst supporting method for a polymer electrolyte fuel cell according to any one of claims 1-3, wherein
in the catalyst-supporting step, inert gas or air is supplied to the one of the anode and the cathode.

5. The catalyst supporting method for a polymer electrolyte fuel cell according to any one of claims 1-4, wherein
in the making step of the layered unit, a plurality of the layered units is assembled with a fluid distribution member (16, 26) to form a fuel cell stack (6), and the catalyst-supporting step is implemented for the entire fuel cell stack (6).

6. The catalyst supporting method for a polymer electrolyte fuel cell according to any one of claims 1-5, wherein
the catalyst layer, in which the catalyst is supported by reducing the catalyst precursor, of either the anode or the cathode consists of the catalyst metal and the cation-exchange resin, and loading amount of catalyst metal calculated in form of the same cation as the catalyst precursor is an excess of 0.1-2.0 mg/cm² over ion exchange capacity of the cation-exchange resin.

7. A catalyst supporting method for a polymer electrolyte fuel cell for supporting a catalyst metal in a catalyst layer (12) of an anode (1) and a catalyst layer (22) of a cathode (2), **characterized in that**
the catalyst supporting method for a polymer electrolyte fuel cell includes steps of
a first step for arranging, in a sequential order, a gas diffusion layer (10) of the anode (1), the catalyst layer (12) of the anode (1), a proton-conductive polymer membrane (4), the catalyst layer (22) of the cathode (2), and a gas diffusion layer (20) of the cathode (2), and for forming a plurality of membrane electrode assemblies (3) including a precursor of the catalyst metal which can be reduced in at least one of the catalyst layer (12) of the anode (1) and the catalyst layer (22) of the cathode (2),
a second step for assembling a gas distribution member (16) for supplying fuel to the catalyst layer (12) of the anode (1) through the gas diffusion layer (20) of the anode (1), a gas distribution member (26) for supplying oxidant gas to the catalyst layer (22) of the cathode (2) through the gas diffusion layer (20) of the cathode (2), and the membrane electrode assembly (3), to form a fuel cell stack (6) having a flow channel (35) for supplying the fuel to the gas distribution member (16) for supplying the fuel, and a flow channel (36) for supplying the oxidant gas to the gas distribution member (26) for supplying the oxidant gas, and
a third step for supplying the reducer gas to at least one of the catalyst layer (12) of the anode (1) and the catalyst layer (22) of the cathode (2) through at least one of the flow channel (35) for supplying the fuel or the flow channel (36) for supplying the oxidant gas to reduce the precursor of the catalyst metal included in at least the one of the catalyst layer (12) of the anode (1) and the catalyst layer (22) of the cathode (2) and thus to deposit the catalyst metal in at least the one of the catalyst layer (12) of the anode (1) and the catalyst layer (22) of the cathode (2).

8. The catalyst supporting method for a polymer electrolyte fuel cell according to claim 7, wherein
the third step is implemented in a condition where a temperature of the fuel cell stack (6) is maintained within a range of from a room temperature to 120 °C.
